# EUROPEAN PATENT APPLICATION

(11) **EP 3 322 011 A1**
(43) Date of publication of application: **16.05.2018**
(21) Application number: 16821199.3
(22) Date of filing: 16.06.2016
(51) Int. Cl.: H01M 4/96, H01M 8/02, H01M 8/18

(54) **ELECTRODE FOR REDOX FLOW BATTERY, AND REDOX FLOW BATTERY SYSTEM**

(30) Priority: 09.07.2015 JP 2015138024
(71) Applicant: Sumitomo Electric Industries, Ltd., Osaka-shi, Osaka 541-0041 (JP)
(72) Inventor: HANAFUSA, Kei, Osaka-shi Osaka 554-0024 (JP); ITO, Kenichi, Osaka-shi Osaka 554-0024 (JP)
(74) Representative: Boult Wade Tennant
(86) International application number: PCT/JP2016/067865
(87) International publication number: WO 2017/006729

(57) **Abstract**

An electrode for a redox flow battery including a porous body formed of a carbon material, wherein the (002) plane of the carbon material has an interlayer distance in the range of 3.354 to 3.452 angstroms as measured by X-ray diffraction. The electrode for a redox flow battery is preferably an electrode for a redox flow battery in which the oxygen content derived from carbon monoxide and carbon dioxide ranges from 1 to 100 µmol/g as measured by temperature programmed desorption/mass spectrometry.

## Description

### Technical Field

The present invention relates to an electrode for a redox flow battery and to a redox flow battery system.

The present application claims the priority of Japanese Patent Application No. 2015-138024, filed July 9, 2015, which is incorporated herein by reference in its entirety.

### Background Art

A typical redox flow battery (hereinafter also referred to as an RF battery) is a V RF battery, which utilizes vanadium (V) ions as the active material of each electrode (paragraph 0003 in the specification of Patent Literature 1). A typical RF battery electrode serving as a reaction field is a porous body, such as carbon felt composed of carbon fibers (for example, paragraph 0040 in the specification of Patent Literature 1).

Patent Literature 1 discloses a Mn-Ti RF battery, which contains manganese (Mn) ions as the positive-electrode active material and titanium (Ti) ions as the negative-electrode active material.

### Citation List

### Patent Literature

PTL 1: International Publication WO 2011/111254

### Summary of Invention

An electrode for a redox flow battery according to one aspect of the present invention includes a porous body consisting of a carbon material, wherein the (002) plane of the carbon material has an interlayer distance in the range of 3.354 to 3.452 angstroms as measured by X-ray diffraction.

A redox flow battery system according to one aspect of the present invention includes a positive electrode, a negative electrode, a positive electrode electrolyte to be supplied to the positive electrode, and a negative electrode electrolyte to be supplied to the negative electrode.

The positive electrode is the electrode for a redox flow battery.

The positive electrode electrolyte contains at least one type of ions selected from chloride ions, manganese ions, bromine ions, and cerium ions.

### Brief Description of Drawings

[Fig. 1] Figure 1 is a graph showing the relationship between the interlayer distance of the (002) plane of a carbon material measured in the test example 1 and the initial resistivity and time-dependent resistivity of an RF battery produced.
[Fig. 2] Figure 2 is an explanatory view of the basic structure and basic operating principle of a redox flow battery system according to a first embodiment.
[Fig. 3] Figure 3 is a schematic view of a cell stack for use in the redox flow battery system according to the first embodiment.

### Description of Embodiments

An RF battery is a storage battery that supplies an electrolyte to an electrode to cause a cell reaction. An RF battery has advantages of (1) the ease with which the capacity can be increased to the megawatt (MW) level, (2) long-life, (3) accurate monitoring of the state of charge (SOC) of the battery, and (4) a high degree of design flexibility with independent design of battery output and battery capacity, and is a promising storage battery for use in the stabilization of an electric power system.

Typically, an RF battery includes a battery cell as a main component. The battery cell includes a positive electrode to which a positive electrode electrolyte is to be supplied, a negative electrode to which a negative electrode electrolyte is to be supplied, and a membrane between the positive electrode and the negative electrode. Such an RF battery, together with a circulation mechanism for circulating and supplying an electrolyte to the RF battery, constitutes an RF battery system. The electrolyte contains ions serving as an active material for a cell reaction, and the electrodes are utilizes as reaction fields.

A Mn-Ti RF battery has advantages of a higher electromotive force than a V RF battery and relatively inexpensive raw materials for active materials.

### [Problems to be Solved by the Present Disclosure]

There is a demand for a redox flow battery system that can have good characteristics for extended periods. The characteristics of a redox flow battery depend on the quality of electrodes. Thus, there is a demand for an electrode for redox flow batteries that is less likely to deteriorate over time.

A typical electrolyte for use in an RF battery system is an aqueous solution containing an acid, such as sulfuric acid. Due to their high resistance to acids or the like (chemical resistance, oxidation resistance, etc.) and high electrical conductivity, carbon materials, such as carbon fibers, are preferred constituent materials of RF battery electrodes. However, even an RF battery electrode composed of a carbon material may suffer oxidative degradation over time. As a result of the electrolysis of water in a side reaction of a cell reaction, oxygen can be evolved on the positive electrode. This is because an RF battery electrode, particularly a positive electrode, is immersed in an electrolyte that can evolve oxygen. Oxidative degradation of an electrode may result in an insufficient reaction field and an increase in the resistivity of an RF battery over time.

In particular, when ions with a higher standard oxidation-reduction potential than V ions, such as Mn ions, are used as a positive-electrode active material, degradation, such as oxidative degradation, of an electrode (particularly a positive electrode) is more likely to occur over time.

In view of such situations, it is an object to provide a redox flow battery system that can have good characteristics for extended periods, and an electrode for a redox flow battery that contributes to the production of such a redox flow battery system.

### [Advantages of the Present Disclosure]

An electrode for a redox flow battery according to the present disclosure contributes to the production of a redox flow battery system that can have good characteristics for extended periods.

A redox flow battery system according to the present disclosure can have good characteristics for extended periods.

### [Embodiments of Present Invention]

The present inventors have studied a porous body formed of a carbon material as an RF battery electrode and have found that a carbon material with a specific crystal structure can reduce the increase in the resistivity of the RF battery over time. In particular, the present inventors have found that even when an electrolyte containing ions with a high standard oxidation-reduction potential as an active material is used, the resistivity is less likely to increase over time. When a porous body formed of such a carbon material is used as an RF battery electrode, the resulting RF battery system suffers little characteristic degradation over time and has good characteristics for extended periods. The present invention is based on these findings.

First, the embodiments of the present invention will be described below.
(1) An electrode for a redox flow battery (RF battery electrode) according to an embodiment of the present invention includes a porous body formed of a carbon material, wherein the (002) plane of the carbon material has an interlayer distance in the range of 3.354 to 3.452 angstroms as measured by X-ray diffraction.
   In the RF battery electrode, the interlayer distance of the (002) plane of the carbon material (hereinafter also referred to as the interlayer distance d₍₀₀₂₎) is in a specific range. Thus, the use of the RF battery electrode in an RF battery, particularly as a positive electrode on which a side reaction can evolve oxygen, can reduce the increase in resistivity over time. This is probably partly because a relatively short interlayer distance d₍₀₀₂₎ results in a lower likelihood of oxidative degradation over time. A lower likelihood of degradation, such as oxidative degradation, of the electrode results in a sufficient reaction field and can thereby reduce the increase in resistivity. Thus, the RF battery electrode contributes to the production of an RF battery system that can have good characteristics for extended periods.
(2) An RF battery electrode according to an embodiment of the present invention can be used in a redox flow battery system including a positive electrode electrolyte containing at least one type of ions selected from chloride ions, manganese ions, bromine ions, and cerium ions.
   Each type of ions in the positive electrode electrolyte has a standard oxidation-reduction potential higher than the standard oxidation-reduction potential of vanadium ions (1.0 V) used in V RF batteries, and is suitable for a positive-electrode active material. An RF battery system including a positive electrode electrolyte containing such ions with a high standard oxidation-reduction potential as a positive-electrode active material can have a high electromotive force. In such an RF battery system including a positive electrode electrolyte, however, a side reaction tends to occur on the positive electrode, and oxygen evolved by the side reaction can cause oxidative degradation of the positive electrode over time. Even when the RF battery electrode is used as a positive electrode of such an RF battery system including a positive electrode electrolyte containing specific ions, the RF battery electrode can reduce degradation of the positive electrode over time and can reduce the increase in resistivity over time. In particular, this embodiment is suitable for a Mn-Ti RF battery including a negative electrode electrolyte containing titanium ions as a negative-electrode active material.
(3) In an RF battery electrode according to an embodiment of the present invention, the oxygen content derived from carbon monoxide and carbon dioxide ranges from 1 to 100 µmol/g as measured by temperature programmed desorption/mass spectrometry.
   In this embodiment, an oxygen content in the specific range results in higher wettability to the electrolyte, a reduction in the decrease in electrical conductivity due to excess oxygen, and a lower initial resistivity. Thus, the embodiment contributes to the production of an RF battery system that can maintain the initial low-resistance state for extended periods.
(4) A redox flow battery system (RF battery system) according to an embodiment of the present invention includes a positive electrode, a negative electrode, a positive electrode electrolyte to be supplied to the positive electrode, and a negative electrode electrolyte to be supplied to the negative electrode.
   The positive electrode is the electrode for a redox flow battery.
   The positive electrode electrolyte contains at least one type of ions selected from chloride ions, manganese ions, bromine ions, and cerium ions.
   Each of these ions has a high standard oxidation-reduction potential. The RF battery system including a positive electrode electrolyte containing such ions as a positive-electrode active material can have a high electromotive force. The RF battery system, which includes the positive electrode electrolyte containing the specific ions and includes the RF battery electrode as a positive electrode, suffers less degradation of the positive electrode over time and can have a smaller increase in resistivity over time. Thus, the RF battery system can have good characteristics for extended periods.
(5) In an RF battery system according to an embodiment of the present invention, the positive electrode electrolyte contains manganese ions.
   This embodiment can have good characteristics for extended periods and can have a high electromotive force due to the manganese ions with a standard oxidation-reduction potential of 1.51 V.
(6) In the RF battery system according to the embodiment described in (5), the negative electrode electrolyte may contain titanium ions.

Manganese ions in the positive electrode electrolyte and titanium ions in the negative electrode electrolyte can form a redox pair with a high electromotive force. This embodiment can have good characteristics for extended periods and can have a high electromotive force. Furthermore, titanium ions contained in the positive electrode electrolyte over time can be expected to have an effect of reducing the precipitation of manganese oxide.

### [Details of Embodiments of Present Invention]

Redox flow battery (RF battery) systems according to embodiments of the present invention and RF battery electrodes according to embodiments of the present invention will be described in detail below with reference to the accompanying drawings. Like reference numerals denote like parts throughout the figures.

### [First Embodiment]

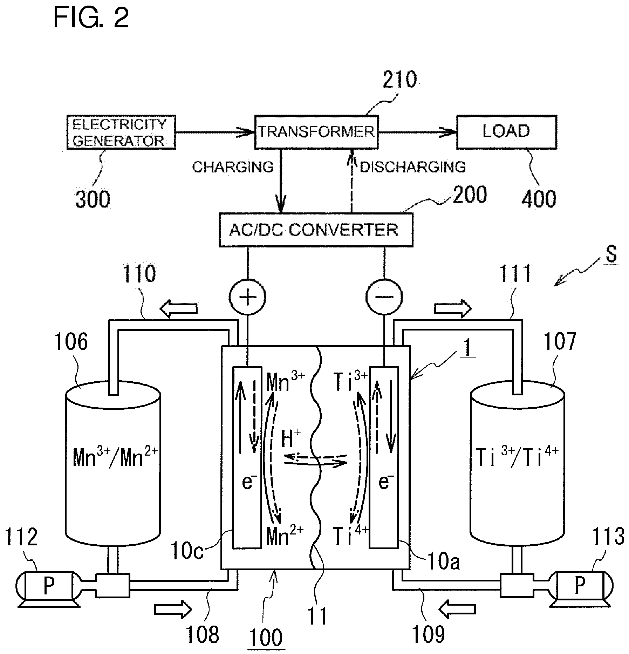

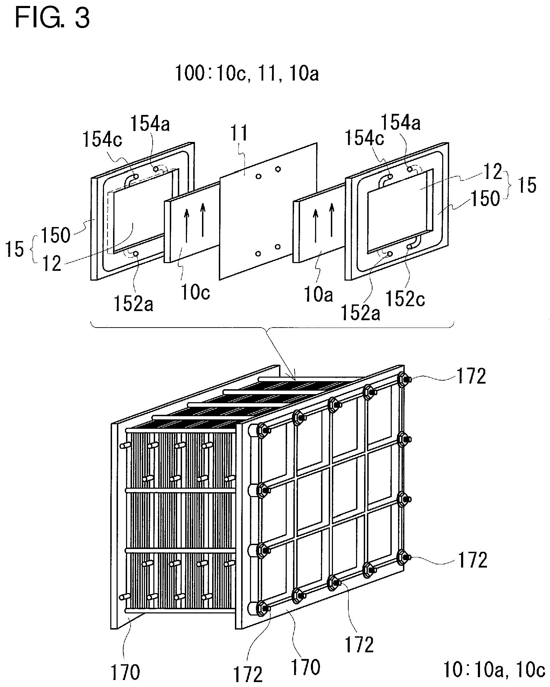

Referring to Figs. 2 and 3, the outline of an RF battery system S according to a first embodiment and the basic structure of an RF battery 1 included in the RF battery system S will be described, and then an RF battery electrode according to the first embodiment used in the RF battery 1 and an electrolyte of the RF battery system S will be described in detail. In Fig. 2, ions in a positive electrode tank 106 and a negative electrode tank 107 are examples of ionic species contained in a positive electrode electrolyte and a negative electrode electrolyte. In Fig. 2, the solid arrow indicates charging, and the dashed arrow indicates discharging.

### (Outline of RF Battery System)

As illustrated in Fig. 2, the RF battery system S according to the first embodiment includes the RF battery 1, which includes a positive electrode 10c and a negative electrode 10a, a positive electrode electrolyte to be supplied to the positive electrode 10c, and a negative electrode electrolyte to be supplied to the negative electrode 10a. The RF battery system S further includes a circulation mechanism described later, which supplies the electrolytes to the electrodes 10. Typically, the RF battery 1 is coupled to an electricity generator 300 and a load 400, such as an electric power system or customer, via an AC/DC converter 200 and a transformer 210. The RF battery 1 performs charging using the electricity generator 300 as an electricity supply source and performs discharging to the load 400, which is a power supply target. For example, the electricity generator 300 is a photovoltaic generator, a wind power generator, or a general power plant.

### (Basic Structure of RF Battery)

The RF battery 1 includes a battery cell 100 as a main component. The battery cell 100 includes the positive electrode 10c, the negative electrode 10a, and a membrane 11 between the positive electrode 10c and the negative electrode 10a. Typically, the RF battery 1 includes a plurality of the battery cells 100 with a bipolar plate 12 interposed between adjacent battery cells 100 and 100 (Fig. 3).

An electrolyte containing ions serving as an active material is supplied to the electrodes 10. The electrodes 10 are reaction fields where active material ions undergo a cell reaction and are formed of a porous body through which an electrolyte can flow. The RF battery electrode according to the first embodiment is composed of a porous body formed of a carbon material. One feature of the RF battery electrode according to the first embodiment is that the carbon material has a specific crystal structure (described in detail later). One feature of the RF battery system S according to the first embodiment is that the positive electrode 10c is the electrode according to the first embodiment.

The membrane 11 is a separating member for separating the positive electrode 10c from the negative electrode 10a and is a member through which specified ions can pass.

The bipolar plate 12 is a flat member between the positive electrode 10c and the negative electrode 10a and is an electrically conductive member that can carry an electric current but is impervious to an electrolyte.

As illustrated in Fig. 3, typically, the bipolar plate 12 is used in the form of a frame assembly 15 that includes a frame 150 on the periphery of the bipolar plate 12. The frame 150 has an opening on its front and back surfaces and has supply holes 152c and 152a for supplying an electrolyte to the electrodes 10 and drain holes 154c and 154a for draining the electrolyte disposed on the bipolar plate 12.

The battery cells 100 are stacked and used in the form of a cell stack. As illustrated in Fig. 3, the cell stack is constructed by repeatedly stacking the bipolar plate 12 of one frame assembly 15, the positive electrode 10c, the membrane 11, the negative electrode 10a, and the bipolar plate 12 of the other frame assembly 15. In the case of the RF battery 1 for large-capacity applications, a predetermined number of the battery cells 100 are stacked to form a subcell stack, and a plurality of the subcell stacks are stacked to form a cell stack. Figure 3 illustrates the cell stack composed of subcell stacks. Instead of the bipolar plate 12, a current collector (not shown) is disposed on the electrode 10 at each end of the subcell stack or cell stack in the stacking direction of the battery cells 100. Typically, an end plate 170 is disposed at each end of the cell stack in the stacking direction of the battery cells 100, and the pair of end plates 170 and 170 are joined with a coupling member 172, such as long bolts.

### (Circulation Mechanism)

As illustrated in Fig. 2, the circulation mechanism includes the positive electrode tank 106 for storing a positive electrode electrolyte circulated and supplied to the positive electrode 10c, the negative electrode tank 107 for storing a negative electrode electrolyte circulated and supplied to the negative electrode 10a, pipes 108 and 110 between the positive electrode tank 106 and the RF battery 1, pipes 109 and 111 between the negative electrode tank 107 and the RF battery 1, and pumps 112 and 113 on the pipes 108 and 109 on the upstream (supply) side. The supply holes 152c and 152a and the drain holes 154c and 154a in the stacked frame assemblies 15 constitute an electrolyte flow path to which the pipes 108 to 111 are coupled.

The RF battery system S circulates and supplies a positive electrode electrolyte to the positive electrode 10c through a positive electrode electrolyte circulation path including the positive electrode tank 106 and the pipes 108 and 110 and circulates and supplies a negative electrode electrolyte to the negative electrode 10a through a negative electrode electrolyte circulation path including the negative electrode tank 107 and the pipes 109 and 111. During the circulation and supply, charging and discharging are performed in association with a valence change reaction of active material ions in the positive electrode electrolyte and the negative electrode electrolyte. One feature of the RF battery system S according to the first embodiment is that the positive electrode electrolyte contains specific ions (described in detail later).

### (Electrode)

### • Outline

The electrodes 10 are formed of a porous body with open pores. The porous body is formed of a carbon material. The carbon content of the carbon material is 99% or more by mass, and the remainder is composed of gas components described later, incidental impurities, etc. The incidental impurity content of the carbon material is preferably 1000 ppm or less by mass. The carbon material of the porous body may be carbon fiber or a carbon powder. Carbon materials have high electrical conductivity, chemical resistance, and oxidation resistance. Thus, a porous body formed of a carbon material is suitable for the electrodes 10 according to the first embodiment, which require high electrical conductivity and resistance to an electrolyte. The carbon fiber has a size (fiber diameter) in the range of approximately 1 to 10 µm, for example.

Specific examples of the porous body formed of a carbon material include sheet-like fiber assemblies composed of carbon fibers, such as carbon felt, carbon paper, and carbon cloth.

Carbon felt has advantages of (a) little evolution of oxygen gas even at the oxygen evolution potential during a charging process in an aqueous electrolyte, (b) a large surface area, and (c) a high electrolyte flow rate.

Carbon paper has advantages of (α) easily providing a small thin battery and (β) high electrical conductivity in the thickness direction.

The positive electrode 10c and the negative electrode 10a in this embodiment are fiber assembly sheets.

In the electrode according to the first embodiment, the porous body is formed of a carbon material with a specific crystal structure. More specifically, the (002) plane of the carbon material has an interlayer distance d₍₀₀₂₎ in the range of 3.354 to 3.452 angstroms as measured by X-ray diffraction. The positive electrode 10c in the RF battery system S according to the first embodiment is the electrode according to the first embodiment composed of the porous body formed of the carbon material with the specific crystal structure.

### • Crystal Structure

The electrode according to the first embodiment is formed of the carbon material with an interlayer distance d₍₀₀₂₎ of 3.354 angstroms or more. Thus, the RF battery 1 or the RF battery system S with the electrode does not have an excessively high initial resistivity and has low resistance. The initial resistivity decreases with increasing interlayer distance d₍₀₀₂₎. Thus, the interlayer distance d₍₀₀₂₎ is preferably 3.358 angstroms or more, more preferably 3.38 angstroms or more, still more preferably 3.40 angstroms or more.

The electrode according to the first embodiment is formed of the carbon material with an interlayer distance d₍₀₀₂₎ of 3.452 angstroms or less. The RF battery 1 or the RF battery system S with the electrode can have a smaller increase in resistivity over time and can have low resistance for extended periods from the beginning of operation. This is because the electrode according to the first embodiment is resistant to oxidative degradation over time and can reduce the decrease in reaction fields due to degradation, such as oxidative degradation. The increase in resistivity over time decreases with decreasing interlayer distance d₍₀₀₂₎. Thus, the interlayer distance d₍₀₀₂₎ is preferably 3.45 angstroms or less, more preferably 3.445 angstroms or less, still more preferably 3.44 angstroms or less.

The interlayer distance d₍₀₀₂₎ can be measured with a known X-ray diffractometer. The measurement conditions will be described in detail later.

The carbon material with an interlayer distance d₍₀₀₂₎ in the range described above typically has a graphite crystal structure or a quasi-graphite crystal structure. The porous body formed of such a carbon material is a porous body formed of a high-temperature-treated carbon material carbonized at a high temperature of approximately 1200°C to 1800°C, or 1800°C or more (for example, 2000°C or more).

### • Oxygen Content

As described above, a greater interlayer distance d₍₀₀₂₎ results in the RF battery 1 or the RF battery system S with lower resistance. However, the present inventors have found that an electrode with a trace amount of oxygen in a specific range on the carbon material surface can decrease the initial resistivity even when the interlayer distance d₍₀₀₂₎ is somewhat small. In general, carbon materials are hydrophobic, and electrodes formed of carbon materials are less hydrophilic. However, a specific amount of oxygen on the carbon material surface can probably increase hydrophilicity to an electrolyte. High hydrophilicity enables an electrolyte to permeate into every corner of an electrode and ensures a sufficient reaction field, thereby decreasing initial resistivity.

Thus, the electrode according to the first embodiment preferably has an oxygen content in a specific range. More specifically, the oxygen content preferably ranges from 1 to 100 µmol/g. The term "oxygen content", as used herein, refers to the content measured by temperature programmed desorption/mass spectrometry (TPD-MS) and refers to the total amount of oxygen in carbon monoxide (CO) and carbon dioxide (CO₂) evolved from a sample. The total amount of oxygen is herein referred to as the oxygen content derived from CO and CO₂. The oxygen content derived from CO and CO₂ can be measured with a known TPD-MS apparatus. The measurement conditions will be described in detail later.

An electrode with an oxygen content derived from CO and CO₂ of 1 µmol/g or more has high hydrophilicity to an electrolyte. Thus, the RF battery 1 or the RF battery system S with such an electrode can have a low initial resistivity. A higher oxygen content derived from CO and CO₂ results in higher hydrophilicity. Thus, the oxygen content derived from CO and CO₂ is preferably 5 µmol/g or more, more preferably 10 µmol/g or more. An electrode with an oxygen content derived from CO and CO₂ of 100 µmol/g or less has no excess oxygen on its surface and can reduce the decrease in electrical conductivity due to excess oxygen. Thus, the RF battery 1 or the RF battery system S with such an electrode can have a low initial resistivity. A lower oxygen content derived from CO and CO₂ results in a smaller decrease in electrical conductivity. Thus, the oxygen content derived from CO and CO₂ is preferably 80 µmol/g or less, more preferably 60 µmol/g or less. The RF battery 1 or the RF battery system S including an electrode with an oxygen content derived from CO and CO₂ in this specific range can have a resistance as low as initial resistivity for extended periods from the beginning of operation.

Even when a sample is temporarily immersed in water or an acid, such as sulfuric acid, TPD-MS is not significantly affected by water or the acid and can accurately measure oxygen in the sample. Thus, the measurement of the oxygen content derived from CO and CO₂ by TPD-MS can be accurate in an electrode impregnated with an electrolyte in the RF battery system S, as well as in an electrode not impregnated with an electrolyte before installed in the RF battery 1.

### • Resistivity

The electrode according to the first embodiment has an interlayer distance d₍₀₀₂₎ in the specific range. Thus, the RF battery 1 with the electrode can have a low initial resistivity. The RF battery 1 with the electrode according to the first embodiment has an initial resistivity of 1.8 Ω·cm or less, for example. A lower initial resistivity results in the RF battery 1 or the RF battery system S with higher cell reactivity. Thus, the initial resistivity is preferably 1.6 Ω·cm² or less, more preferably 1.5 Ω·cm² or less.

### • Production

The electrode according to the first embodiment can be produced by a known method that is used for the production of a porous body formed of a carbon material. Typically, a carbon-containing material containing a carbon element (C) is used as a raw material, and the raw material can be carbonized and then subjected to dry oxidation treatment, thus producing a porous body formed of a carbon material.

The carbon-containing material may be polyacrylonitrile, pitch, or rayon.

The conditions for carbonization treatment include heating in an atmosphere of an inert gas, such as argon, or in a nitrogen atmosphere at a temperature of more than 1800°C, 1900°C or more, or 2000°C or more. A heating temperature of more than 1800°C can result in a relatively small interlayer distance d₍₀₀₂₎, as described above.

The conditions for dry oxidation treatment include heating in the air at a temperature in the range of approximately 400°C to 800°C, for example.

### • Negative Electrode

The negative electrode 10a may be a known electrode. When the negative electrode 10a is an electrode other than the electrode according to the first embodiment, for example, an electrode composed of a porous body formed of a carbon material with an interlayer distance d₍₀₀₂₎ of more than 3.452 angstroms, the initial resistivity can be more easily decreased.

Both the positive electrode 10c and the negative electrode 10a may be the electrode according to the first embodiment.

### (Electrolyte)

The RF battery system S includes the electrolytes. The electrolytes contain metal ions or non-metal ions as ions serving as an active material and are supplied to the electrodes 10. For example, the electrolytes of the RF battery system S are V electrolytes containing vanadium (V) ions with different valences as the positive-electrode active material and the negative-electrode active material.

### • Positive Electrode Electrolyte

In particular, the RF battery system S according to the first embodiment includes a positive electrode electrolyte, which contains at least one type of ions selected from chloride ions, manganese ions, bromine ions, and cerium ions as a positive-electrode active material. These ions have a standard oxidation-reduction potential higher than the standard oxidation-reduction potential of vanadium ions (1.0 V). Chloride ions have a standard oxidation-reduction potential of approximately 1.3 V, manganese ions have a standard oxidation-reduction potential of approximately 1.5 V, bromine ions have a standard oxidation-reduction potential of approximately 1.05 V, and cerium ions have a standard oxidation-reduction potential of approximately 1.8 V. Thus, the RF battery system S according to the first embodiment has a high electromotive force.

The positive electrode electrolyte can contain only one type of ions out of the four types of ions in one embodiment or two or more types of ions in another embodiment. The latter embodiment, which contains ions with a noble potential and ions with a less-noble potential, can increase the utilization of the active material and improve the energy density. The concentration of the positive-electrode active material ions in the positive electrode electrolyte (the total concentration in the case of a plurality of types of ions) ranges from approximately 0.3 to 5 M, for example. The ion concentration "M" refers to the molar concentration (mol/liter). The same applies hereinafter.

In particular, the positive electrode electrolyte preferably contains manganese ions as a positive-electrode active material, because the RF battery system S containing the positive electrode electrolyte can have a higher electromotive force than V RF batteries. Furthermore, the positive electrode electrolyte more preferably contains titanium ions in addition to manganese ions, because titanium ions can reduce the precipitation of manganese oxide and stabilize an oxidation-reduction reaction of manganese ions. The concentration of titanium ions in the positive electrode electrolyte ranges from approximately 0.3 to 2 M, for example.

### • Negative Electrode Electrolyte

For example, the negative-electrode active material is at least one type of ions selected from titanium ions, vanadium ions, and chromium ions. These three types of ions, together with the four types of ions described above as the positive-electrode active material, can form a redox pair with a high electromotive force. The RF battery system S with the electrolyte containing such a redox pair has a high electromotive force.

The negative electrode electrolyte can contain only one type of ions out of the three types of ions in one embodiment or two or more types of ions in another embodiment. The latter embodiment can increase the utilization of the active material and improve the energy density, as described above. The concentration of the active material ions in the negative electrode electrolyte (the total concentration in the case of a plurality of types of ions) ranges from approximately 0.3 to 5 M, for example.

In particular, a Mn-Ti RF battery, which includes a positive electrode electrolyte containing manganese ions as a positive-electrode active material and a negative electrode electrolyte containing titanium ions as a negative-electrode active material, has an electromotive force of approximately 1.4 V and is therefore preferred. In a Mn-Ti RF battery, titanium ions in the negative electrode electrolyte move to the positive electrode electrolyte over time and are expected to reduce the precipitation of manganese oxide.

Each of the positive electrode electrolyte and the negative electrode electrolyte can contain both manganese ions and titanium ions in one embodiment, and particularly the positive electrode electrolyte and the negative electrode electrolyte can have the same composition. This embodiment has advantages of (1) easily avoiding the decrease in battery capacity due to the decrease in the amount of active material over time, (2) easily reducing variations in the volumes of the positive electrode electrolyte and the negative electrode electrolyte caused by liquid transfer, (3) easily reducing variations in concentration caused by the transfer of manganese ions and titanium ions to counter electrodes, and (4) the ease of manufacture of the electrolytes.

### • Solvent of Electrolyte

The ions in the positive electrode electrolyte and the negative electrode electrolyte are water-soluble ions. Thus, the positive electrode electrolyte and the negative electrode electrolyte can be an aqueous solution containing water as a solvent. The positive electrode electrolyte and the negative electrode electrolyte can be an aqueous solution containing at least one acid selected from sulfuric acid, phosphoric acid, nitric acid, and hydrochloric acid. For example, the electrolyte containing such an aqueous solution of an acid can be easily produced by dissolving a salt of an acid in water as a raw material for the active material.

### (Other Constituents)

### • Frame Assembly

The bipolar plate 12 is composed of an electrically conductive material that has low electrical resistance, that does not react with an electrolyte, and that is resistant to the electrolyte (chemical resistance, acid resistance, etc.), typically an electrically conductive material that contains a carbon material. For example, a composite material containing a carbon material and an organic material can be used. More specifically, an electrically conductive plastic containing an electrically conductive inorganic material (powder, fiber, etc.), such as graphite, and an organic material, such as a polyolefin organic compound or a chlorinated organic compound, formed into a plate can be used.

The frame 150 is constituted by an electrically insulating resin that is resistant to an electrolyte.

### • Membrane

For example, the membrane 11 is an ion-exchange membrane, such as a cation-exchange membrane or an anion-exchange membrane. Ion-exchange membranes are characteristically excellent in (1) separation of ions of the positive-electrode active material from ions of the negative-electrode active material and (2) permeability of the charge carrier H⁺ ions in the battery cell 100, and are suitable for the membrane 11. The membrane 11 can be a known membrane.

### • Advantages

The electrode according to the first embodiment is composed of a porous body formed of a carbon material with a specific crystal structure. The electrode used as a component of the RF battery 1, particularly as the positive electrode 10c, can therefore reduce the increase in resistivity over time. Thus, the RF battery 1 or the RF battery system S with the electrode according to the first embodiment is less likely to deteriorate and can have good characteristics for extended periods.

Although the positive electrode electrolyte contains manganese ions with a higher standard oxidation-reduction potential than vanadium ions, the RF battery system S according to the first embodiment includes the electrode according to the first embodiment as the positive electrode 10c, and the positive electrode 10c is resistant to oxidative degradation over time, thus reducing the increase in resistivity due to the degradation of the electrodes 10. Thus, the RF battery system S according to the first embodiment can have good characteristics for extended periods. The advantages of the electrode according to the first embodiment and the RF battery system S according to the first embodiment are more specifically described in the following test example.

### [Test Example 1]

Porous bodies formed of various carbon materials were checked for the crystal structure of the carbon materials by X-ray diffraction. The oxygen contents of the porous bodies were measured by TDP-MS. An RF battery system including each of the porous bodies as an electrode was checked for resistivity change over time.

In this test, porous bodies formed of four types of carbon materials were prepared, and electrodes composed of the porous bodies are referred to as electrodes A to D. The electrodes were produced by carbonization treatment and subsequent dry oxidation treatment of a carbon-containing material, such as polyacrylonitrile, under the following different treatment conditions.

The electrode D is a known electrode.

The carbonization treatment conditions include a heating temperature of 2000°C or more in the electrodes A and B and 1800°C or less in the electrodes C and D.

The dry oxidation treatment conditions are known conditions in the electrode B. The dry oxidation treatment in the electrode A was a heat treatment in the air at 500°C for 1 hour.

The electrode C is the electrode D subjected to dry oxidation treatment under the conditions of the electrode A.

A sample for X-ray diffraction measurement was taken from each of the electrodes, and X-ray diffraction was performed under the following measurement conditions. The interlayer distance d₍₀₀₂₎ (angstroms) was determined from the diffraction peak of the (002) plane of each of the carbon materials. Table 1 shows the results. A commercially available X-ray diffractometer was used for the measurement.

### [Light Source Used]

Cu-Kα, (multilayer mirror)

### [Excitation Conditions]

45 kV, 40 mA

### [Scanning Method]

θ-2θ scan

### [Measurement Range]

2θ = 18 to 32 degrees, 0.02-degree step, 2 seconds/step

A sample for the measurement of the oxygen content was taken from each of the electrodes, and TPD-MS was performed under the following measurement conditions. CO and CO₂ in the evolved gas were analyzed, and the spectrum was integrated to determine the oxygen content (µmol/g) derived from CO and CO₂. Table 1 shows the results. A commercially available TPD-MS apparatus was used for the measurement.

### [Amount of Sample]

20 to 50 mg

### [Heating Conditions]

Heating in a He gas flow.

The heating rate from room temperature (approximately 20°C to 25°C) to 1000°C was 10°C/min.

The electrodes are formed of a high-temperature treated carbon material and have a quasi-graphite crystal structure. Thus, a technique described in "A quantitative analysis of carbon edge sites and an estimation of graphene sheet size in high-temperature treated, non-porous carbons", Carbon, Volume 80, December 2014, pp. 135-145, can be referred to for the measurement of the oxygen content.

In this test, four RF battery systems including one of the electrodes A to D as a positive electrode and the electrode C as a negative electrode were prepared. Each of the RF battery systems was charged and discharged for 2 weeks under the following charge-discharge test conditions.

The positive electrode and the negative electrode of the RF batteries had an electrode area of 9 cm².

The RF batteries included a membrane Nafion (registered trademark) N212.

Each of the positive electrode electrolyte and the negative electrode electrolyte was an aqueous sulfuric acid solution containing manganese ions and titanium ions. The raw materials for the electrolytes were manganese sulfate, titanium sulfate, and sulfuric acid.

### <Charge-Discharge Test Conditions>

### [Concentration of Ions in Electrolyte]

The concentration of titanium (Ti) ions was 1 M, the concentration of manganese (Mn) ions was 1 M, and the concentration of sulfur (S) ions was 5 M. The sulfur (S) ions include sulfate ions.

### [Electrolyte Flow Rate]

The electrolyte flow rate was 5.4 milliliter/min., and the amount of each of the positive electrode electrolyte and the negative electrode electrolyte was 15 milliliter.

### [Switching Voltage]

The final discharge voltage was 1 V, and the final charge voltage was 1.5 V.

### [Electric Current]

630 mA (constant-current charge/discharge)

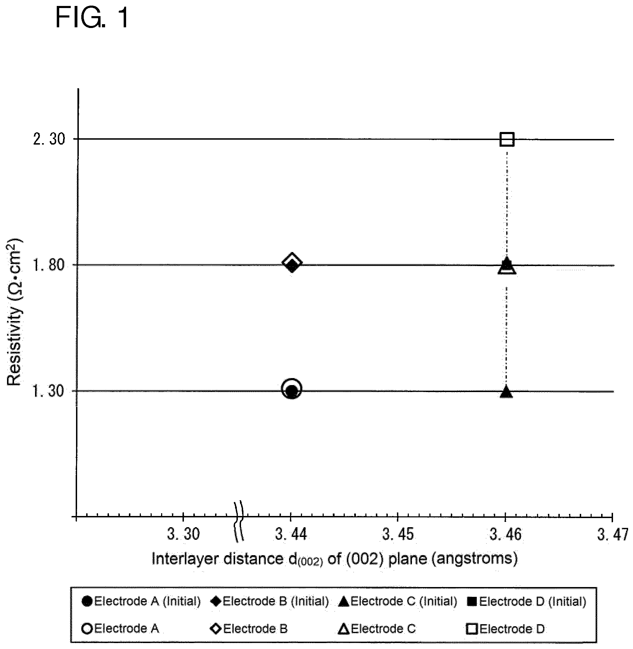

In this test, the cell resistivity was determined from a charge-discharge curve. The cell resistivity at 10th cycle was taken as initial resistivity (Ω·cm²), and the cell resistivity after continuous operation for 2 weeks was taken as resistivity (Ω·cm²) after a predetermined time. Table 1 and Fig. 1 show the results.

**[Table 1]**

| Sample No. | Positive electrode | Interlayer distance d₍₀₀₂₎ of (002) plane (angstroms) | Oxygen content (µmol/g) | Resistivity (Ω·cm²) | | |
|---|---|---|---|---|---|---|
| | | | | Initial | After a predetermined time | Increase |
| 1-1 | Electrode A | 3.44 | 25 | 1.3 | 1.31 | 0.01 |
| 1-2 | Electrode B | 3.44 | 0.5 | 1.8 | 1.81 | 0.01 |
| 1-3 | Electrode C | 3.46 | 25 | 1.3 | 1.8 | 0.5 |
| 1-4 | Electrode D | 3.46 | 0.5 | 1.8 | 2.3 | 0.5 |

In Fig. 1, the horizontal axis is the interlayer distance d₍₀₀₂₎ (angstroms) of the carbon material, and the vertical axis is resistivity (Ω·cm²). The initial resistivity of each sample is represented by a solid symbol, and the resistivity after a predetermined time is represented by an open symbol.

Table 1 and Fig. 1 show that a shorter interlayer distance d₍₀₀₂₎ of the carbon material in the electrode can result in a smaller increase in the resistivity of the RF battery over time. An interlayer distance d₍₀₀₂₎ of less than 3.46 angstroms results in a resistivity increase of less than 0.5 Ω·cm² over time. The results of the sample Nos. 1-1 and 1-2 show that an interlayer distance d₍₀₀₂₎ of approximately 3.44 angstroms or less results in a very small resistivity increase of 0.01 Ω·cm² or less over time. In this test, although the operating environment of the positive electrode favors oxidative degradation due to manganese ions with a high standard oxidation-reduction potential in the positive electrode electrolyte, one reason for the results is probably that the positive electrode suffered less oxidative degradation.

The resistivity increase over time is preferably smaller. More specifically, the resistivity increase over time is preferably 0.3 Ω·cm² or less, more preferably 0.2 Ω·cm² or less. Considering the correlation between the interlayer distance d₍₀₀₂₎ and the resistivity increase over time, the interlayer distance d₍₀₀₂₎ is preferably 3.452 angstroms or less in order to achieve a resistivity increase of 0.3 Ω·cm² or less over time, and the interlayer distance d₍₀₀₂₎ is preferably 3.448 angstroms or less in order to achieve a resistivity increase of 0.2 Ω·cm² or less over time. However, an excessively short interlayer distance d₍₀₀₂₎ results in an excessively high initial resistivity. Thus, the interlayer distance d₍₀₀₂₎ is preferably 3.354 angstroms or more, more preferably 3.40 angstroms or more.

Table 1 and Fig. 1 also show that even when the interlayer distance d₍₀₀₂₎ is somewhat small, an interlayer distance d₍₀₀₂₎ in a specific range can result in a low initial resistivity. The results of the sample Nos. 1-1 and 1-2 show that even an interlayer distance d₍₀₀₂₎ of less than 3.46 angstroms results in an initial resistivity of less than 2 Ω·cm². As described above, the RF battery systems of the sample Nos. 1-1 and 1-2, which have a small resistivity increase over time, a low initial resistivity, and a low resistivity after a predetermined time, have good characteristics for extended periods.

In particular, Table 1 shows that even with the same interlayer distance d₍₀₀₂₎, a higher oxygen content derived from CO and CO₂ can result in a lower initial resistivity. In this test, when the oxygen content derived from CO and CO₂ is more than 0.5 µmol/g, the initial resistivity can be decreased. This is partly because the presence of an appropriate amount of oxygen on the surface of the carbon material in the electrode can increase hydrophilicity to the electrolyte on the electrode, thereby providing the electrode with high electrical conductivity and reactivity.

Since the initial resistivity is preferably smaller, the oxygen content derived from CO and CO₂ is preferably 1 µmol/g or more. However, an excessively high oxygen content derived from CO and CO₂ results in a low electrical conductivity and a high initial resistivity due to excess oxygen. Thus, the oxygen content derived from CO and CO₂ is preferably 100 µmol/g or less.

Thus, an RF battery or an RF battery system with a smaller increase in resistivity over time can be produced by using an RF battery electrode composed of a porous body formed of a carbon material with a specific crystal structure. Furthermore, an RF battery system with a smaller increase in resistivity over time and with good characteristics for extended periods can be produced by using such an electrode as a positive electrode even when a Mn-Ti electrolyte is used.

The present invention is defined by the appended claims rather than by these embodiments. All modifications that fall within the scope of the claims and the equivalents thereof are intended to be embraced by the claims. For example, at least one of the following modifications can be made to the RF battery system produced in the test example 1.
1. The composition of the positive electrode electrolyte is made different from the composition (ionic species, concentration, etc.) of the negative electrode electrolyte.
2. At least one of the type and concentration of acid used in the solvent is changed.
3. The size of the electrodes is changed.
4. The material of the membrane is changed.

### Reference Signs List

S redox flow battery system 1 redox flow battery
10 electrode 10c positive electrode 10a negative electrode 11 membrane 12 bipolar plate
100 battery cell
15 frame assembly 150 frame
152c, 152a supply hole 154c, 154a drain hole
170 end plate 172 coupling member
106 positive electrode tank 107 negative electrode tank 108 to 111 pipe
112, 113 pump
200 AC/DC converter 210 transformer 300 electricity generator 400 load

## Claims

1. An electrode for a redox flow battery comprising:
a porous body consisting of a carbon material,
wherein a (002) plane of the carbon material has an interlayer distance in the range of 3.354 to 3.452 angstroms as measured by X-ray diffraction.

2. The electrode for a redox flow battery according to Claim 1, for use in a redox flow battery system including a positive electrode electrolyte containing at least one type of ions selected from chloride ions, manganese ions, bromine ions, and cerium ions.

3. The electrode for a redox flow battery according to Claim 1 or 2, wherein an oxygen content derived from carbon monoxide and carbon dioxide ranges from 1 to 100 µmol/g as measured by temperature programmed desorption/mass spectrometry.

4. A redox flow battery system comprising:
a positive electrode; a negative electrode; a positive electrode electrolyte to be supplied to the positive electrode; and a negative electrode electrolyte to be supplied to the negative electrode,
wherein the positive electrode is the electrode for a redox flow battery according to any one of Claims 1 to 3, and
the positive electrode electrolyte contains at least one type of ions selected from chloride ions, manganese ions, bromine ions, and cerium ions.

5. The redox flow battery system according to Claim 4, wherein the positive electrode electrolyte contains manganese ions.

6. The redox flow battery system according to Claim 5, wherein the negative electrode electrolyte contains titanium ions.
